## Europäisches Patentamt

## European Patent Office

## Office européen des brevets

(19)

(11) Veröffentlichungsnummer: **0 162 342 B1**

(12) # EUROPÄISCHE PATENTSCHRIFT

(45) Veröffentlichungstag der Patentschrift:
26.07.89

(51) Int. Cl.⁴: **F 16 K 11/078**

(21) Anmeldenummer: 85105178.9

(22) Anmeldetag: 27.04.85

(54) Steuereinsatz für sanitäre Mischarmaturen.

(30) Priorität: 23.05.84 DE 3419208

(43) Veröffentlichungstag der Anmeldung:
27.11.85 Patentblatt 85/48

(45) Bekanntmachung des Hinweises auf die Patenterteilung:
26.07.89 Patentblatt 89/30

(84) Benannte Vertragsstaaten:
AT BE CH DE FR GB IT LI NL SE

(56) Entgegenhaltungen:
DE-A- 2 756 784
DE-A- 3 325 296
FR-A- 2 500 564
US-A- 3 384 119
US-A- 3 390 701
US-A- 4 108 208

(73) Patentinhaber: **Hans Grohe GmbH & Co. KG,
Auestrasse 9, D-7622 Schiltach (DE)**

(72) Erfinder: **Lorch, Werner, Am Hammergraben 84/I,
D-7230 Schramberg (DE)**

(74) Vertreter: **Patentanwälte Ruff und Beier,
Neckarstrasse 50, D-7000 Stuttgart 1 (DE)**

ACTORUM AG

**Beschreibung**

Die Erfindung betrifft einen Steuereinsatz für sanitäre Mischarmaturen, mit einem feststehenden mit Wassereinlaßöffnungen der Armatur in Verbindung bringbaren, eine vorzugsweise ebene Steuerfläche aufweisenden Steuerelement, das mindestens einen Öffnungsbereich für Kaltwasser und mindestens einen Öffnungsbereich für Warmwasser aufweist, sowie einem gegenüber diesem in zwei Freiheitsgraden mit Hilfe eines Mischerhebels bewegbaren, eine vorzugsweise ebene Steuerfläche aufweisenden Steuerelement, das zur Steuerung der Menge und des Mischverhältnisses je nach seiner Stellung die Öffnungsbereiche abdeckt oder mit mindestens einem Wasserauslaß in Verbindung bringt.

Es ist bereits ein Mischventil bekannt (FR-A-2 500 564), das eine bewegbare Steuerscheibe mit einer Öffnung zum Zusammenwirken mit einem Warmwasser- und einem Kaltwassereinlaß und eine Steuerkante zum Zusammenwirken mit dem Auslaß aufweist. Bei diesem bekannten Mischventil ist also zur Einlaßsteuerung eine Innenkantensteuerung und zur Auslaßsteuerung eine Außenkantensteuerung vorgesehen.

Es ist bereits eine derartige Mischarmatur bekannt (DE-A-2 756 784). Bei dieser ist eine feststehende ebene Scheibe vorhanden, die zwei Wassereinlaß-Öffnungen aufweist, von denen eine für Warmwasser und die andere für Kaltwasser bestimmt ist. Gegenüber dieser feststehenden Scheibe ist eine weitere Scheibe verschiebbar und verdrehbar, wobei die bewegbare Scheibe die beiden Einlaßöffnungen vollständig abdecken und vollständig öffnen kann. Durch Verdrehen der bewegbaren Scheibe wird das Mischungsverhältnis und durch Verschieben der bewegbaren Scheibe die Gesamtmenge an durchströmendem Wasser bestimmt.

Eine weitere Einhand-Mischbatterie dieser Art ist aus DE-A-33 25 296 bekannt. Bei dieser Mischbatterie werden die Öffnungen in einer feststehenden Steuerfläche durch die Außenkanten einer bewegbaren Steuerscheibe verschlossen. Die Einlaß-Öffnung sowohl für Warmwasser als auch für Kaltwasser kann dabei aus zwei nebeneinanderliegenden Öffnungen bestehen.

Diese Mischventile haben entweder eine Innenkanten-Steuerung oder eine Außenkanten-Steuerung.

Innenkanten-Steuerungen haben den Nachteil, daß sie relativ viel Platz benötigen. Die verschiebbare Steuerscheibe muß so groß sein, daß auf beiden Seiten der Steueröffnung noch die entsprechende Abmessung der jeweiligen Öffnung und ein entsprechender Dichtbereich hinzu kommen. Darüber hinaus muß die Steueröffnung selbst in einer Richtung mindestens so groß sein wie die Öffnungen und deren Abstand selbst. Deshalb ist bei gegebener Größe des Mischventils der Strömungsquerschnitt der Steuereinrichtung relativ klein, was zu erhöhten Strömungsgeschwindigkeiten und daher zu störenden Geräuschen führt.

Die bekannten Steuerungen der eingangs genannten Art haben den weiteren Nachteil, daß ihre Anwendungsmöglichkeiten begrenzt sind. Sie lassen sich für unterschiedliche Anwendungsfälle nur schwer anpassen.

Der Erfindung liegt die Aufgabe zugrunde, einen Steuereinsatz für ein Einhebel-Mischventil zu schaffen, dessen Anwendungsmöglichkeiten größer sind als es bisher möglich war.

Zur Lösung dieser Aufgabe ist erfindungsgemäß vorgesehen, daß die Öffnungsbereiche, von denen vorzugsweise mindestens einer mehrere Öffnungen aufweist, und/oder die Konturen des bewegbaren Steuerelements und/oder der Wasserauslaß derart angeordnet und ausgebildet sind, daß sich zwei getrennte selbständige, mechanisch gekoppelte Steuerungen ergeben. Durch diese beiden unabhängig voneinander arbeitenden Steuerungen läßt sich die Anzahl der verschiedenen Anwendungsmöglichkeiten des Steuereinsatzes erhöhen. So ist es beispielsweise möglich, zur Erhöhung des Durchflußquerschnittes beide Steuerungen parallel arbeiten zu lassen. Dies bringt eine stärkere Vergrößerung des Durchflußquerschnittes als in dem Fall, in dem die einzelnen Öffnungsbereiche einer einzigen Steuerung vergrössert würden. Es ist aber auch möglich, die beiden Steuerungen für unterschiedliche Zwecke zu verwenden. So kann zum Beispiel die eine Steuerung für eine Kopfbrause und die zweite Steuerung für eine Seitenbrause verwendet werden. In diesem Fall können beide Steuerungen auf je einen von dem jeweils anderen Wasserauslaß getrennten Wasserauslaß einwirken. Dies ergibt zum einen den Vorteil, daß die beiden Brausen stromab des Mischventils nicht miteinander verbunden sind, so daß bei Abstellen des Wassers das Wasser aus der Kopfbrause nicht durch die Leitung über die Seitenbrause abfließen kann. Darüber hinaus lassen die getrennten Steuerungen für beide Brausen es zu, daß die beiden Brausen unterschiedliche Mischcharakteristika aufweisen. So kann beispielsweise eine Kopfbrause eine andere Maximal-Temperatur bzw. ein anderes maximales Mischverhältnis erhalten als die Seitenbrause.

Nach einem weiteren Merkmal der Erfindung kann vorgesehen sein, daß mindestens zwei Steuerungen auf einen gemeinsamen Wasserauslaß einwirken. Dies ist nicht nur zur Vergrößerung des Querschnittes sinnvoll, sondern auch in Spezialanwendungsfällen, beispielsweise bei den Anforderungen des British Standard. Bei diesen Armaturen muß gewährleistet sein, daß sich der Heißwasserstrom mit dem Kaltwasserstrom erst am Auslaufende des Mischers vermischt. Dies kann nach der Erfindung beispielsweise dadurch erreicht werden, daß das Heißwasser über die eine Steuerung und das Kaltwasser über die zweite Steuerung gesteuert werden und daß ein am Mischerauslaß angeordneter gemeinsamer Wasserauslaß von beiden Steuerungen beliefert wird.

In Weiterbildung der Erfindung kann vorgesehen sein, daß das bewegbare Steuerelement eine äußere Steuerkante zur Verwirklichung der einen Steuerung und eine innere geschlossene Steuerkante zur Verwirklichung der zweiten Steuerung aufweist. Mit anderen Worten weist der Steuereinsatz nach der Erfindung eine Außenkanten- und eine Innenkanten-Steuerung auf.

Es kann vorgesehen sein, daß das feststehende Steuerelement je zwei Öffnungsbereiche für jede Steuerung aufweist. Damit kann jede Steuerung eine Temperatursteuerung durchführen. Es ist jedoch auch möglich, daß beispielsweise zwei Öffnungsbereiche für eine der beiden Steuerungen nur Warmwasser oder nur Kaltwasser aufweisen. Diese Möglichkeit kann dazu benutzt werden, mit Durchlauferhitzern eine günstige Steuerungscharakteristik zu erreichen, die insbesondere deswegen schwierig ist, weil der Hauptdruckabfall im Durchlauferhitzer erzeugt wird und die nachgeschaltete Armatur auf der Heißwasserseite einen möglichst geringen Widerstand haben sollte. Denkbar ist auch, eine der beiden Steuerungen nur für Kaltwasser einzusetzen, um beispielsweise bei hoher Vorlauftemperatur eine Temperaturbegrenzung zu erreichen.

Die Erfindung schlägt ebenfalls vor, daß je zwei Öffnungsbereiche einander diametral gegenüberliegen können.

In Weiterbildung kann vorgesehen sein, daß das feststehende Steuerelement mit einem Wasserauslaß in Verbindung bringbar ist. In diesem Fall kann der Wasseraustritt um 180° umgelenkt wieder durch die gleiche Steuerfläche erfolgen, durch die auch der Wassereintritt erfolgt.

Die Erfindung schlägt weiterhin vor, daß die Steuerflächen Begrenzungsflächen von vorzugsweise ebenen Steuerscheiben sind. Diese beispielsweise aus Keramik bestehenden Steuerscheiben sind zur Darstellung der Steuerflächen besonders geeignet. Falls die Scheiben und die Steuerflächen eben sind, kann der eine Freiheitsgrad eine Drehung und der andere Freiheitsgrad eine Verschiebung der Steuerscheiben sein.

Die Erfindung schlägt vor, daß eine Steuerkante Teil einer die zugehörige Steuerscheibe durchsetzenden Öffnung ist. In diesem Fall erfolgt also ein Wasserdurchtritt von der einen Seite der Steuerscheibe auf deren andere Seite, so daß das Wasser in einen Raum innerhalb des Steuereinsatzes mündet, in dem auch das aus der Außenkanten-Steuerung austretende Wasser einmündet.

Es ist jedoch ebenfalls möglich, wie die Erfindung weiterhin vorschlägt, daß die eine Steuerkante eine in die Steuerfläche ausmündende zur anderen Seite der Steuerscheibe hin geschlossene Ausnehmung begrenzt. Auf diese Weise läßt sich eine besonders einfache Trennung der Wasserauslässe aus beiden Steuerungen ermöglichen, so daß beide Steuerungen auf unterschiedliche Wasserauslässe einwirken können.

Nach einem weiteren Merkmal der Erfindung kann vorgesehen sein, daß beide Steuerungen mindestens teilweise identische Steuerungscharakteristika aufweisen. Damit kann erreicht werden, daß beide Steuerungen die Wassereinlaß-Öffnungen gleichzeitig öffnen. Ebenfalls möglich ist es, daß die beiden Steuerungen gleichzeitig öffnen, jedoch die Änderung des Mischungsverhältnisses bei der einen Steuerung früher aufhört als bei der anderen. Ebenfalls möglich ist es, die beiden Steuerungen nacheinander zu öffnen, wobei sich die Öffnungsvorgänge zeitlich überlappen.

Die Erfindung schlägt vor, daß die einander gegenüberliegenden Öffnungsbereiche sich über etwa den gleichen Winkel erstrecken.

Es kann erfindungsgemäß vorgesehen sein, daß die einander gegenüberliegenden Öffnungsbereiche einen unterschiedlich großen Querschnitt aufweisen. Es ist jedoch auch möglich, daß sie den gleichen Querschnitt aufweisen.

Die Erfindung schlägt vor, daß zwei benachbarte Öffnungsbereiche vorzugsweise gleichen Querschnitts mit einer Steuerkante eine Steuerung bilden.

Weiter Merkmale, Einzelheiten und Vorzüge der Erfindung ergeben sich aus den Ansprüchen, der folgenden Beschreibung bevorzugter Ausführungsformen der Erfindung sowie anhand der Zeichnung. Hierbei zeigen:

Fig. 1 einen Querschnitt durch einen Teil eines Mischventils mit einem Steuereinsatz nach der Erfindung;

Fig. 2 schematisch einen Teilschnitt durch die Anordnung nach Fig. 1 aus einer um 90° versetzten Richtung;

Fig. 3 eine Aufsicht auf die Bodenplatte des Steuereinsatzes der Anordnung nach Fig. 1;

Fig. 4 eine Aufsicht auf die feststehende Steuerscheibe der Anordnung nach Fig. 1;

Fig. 5 eine Aufsicht auf eine erste Ausführungsform einer bewegbaren Steuerscheibe;

Fig. 6 einen Längsschnitt durch eine bewegbare Steuerscheibe einer zweiten Ausführungsform;

Fig. 7 bis 11 schematisch verschiedene Stellungen von feststehender und bewegbarer Steuerscheibe zueinander.

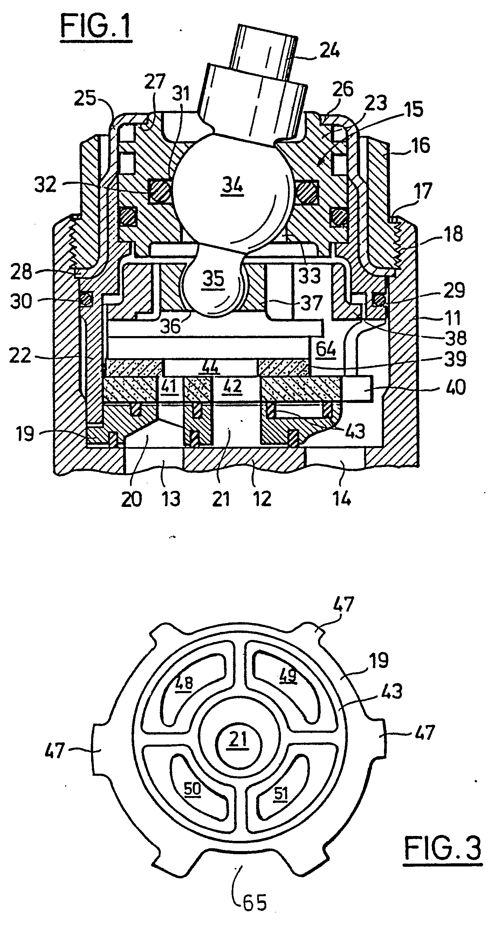

In Fig. 1 ist das Gehäuse 11 eines Mischventils nur abgebrochen dargestellt. Das Gehäuse 11 enthält einen Gehäuseboden 12, der mit mehreren Wassereinlässen 13, von denen in Fig. 1 nur einer zu sehen ist, sowie mit einem Wasserauslaß 14 versehen ist. In das Gehäuse 11 ist ein Steuereinsatz 15 eingesetzt, der von außen durch eine Schraubhülse 16 festgelegt ist. Die Schraubhülse 16 greift mit einem an ihrer Außenseite angeordneten Außengewinde 17 in ein entsprechendes Innengewinde 18 in der zentralen Bohrung des Gehäuses 11 ein.

Der Einsatz 15, der auch Kartusche genannt wird, enthält einen Kartuschenboden 19, der mehrere Durchbrüche 20, 21 aufweist. Die Kartusche enthält weiterhin eine erste Hülse 22, in die von oben ein Halterungsteil 23 für ein Bedienelement 24 eingesetzt ist. Von der Oberseite her ist eine Überwurfhülse 25 über das Halterungsteil 23 gesetzt, die mit ihrem Innenrand 26 auf einer Schulter 27 an der Oberseite des Halterungsteils 23 aufliegt. Die Überwurfhülse 25 besitzt an ihrer in Fig. 1 unteren Seite einen nach außen gerichteten Flansch 28, an dem die Unterseite der Schraubhülse 16 angreift. Die Schraubhülse 16 beaufschlagt daher sowohl das Halterungsteil 23 als auch mit ihrem Flansch 28 die Hülse 22 der Kartusche nach unten, so daß der Steuereinsatz 15 in dem Inneren des Gehäuses 11 festgehalten wird. Zur Abdichtung weist die Hülse 22 eine in einer umlaufenden Ringnut 29 angeordnete Ringdichtung 30 auf. Auch das Halterungsteil 23 ist gegenüber der Innenseite der Hülse 22 mit Hilfe einer in einer Ringnut 31 angeordneten Ringdichtung 32 abgedichtet.

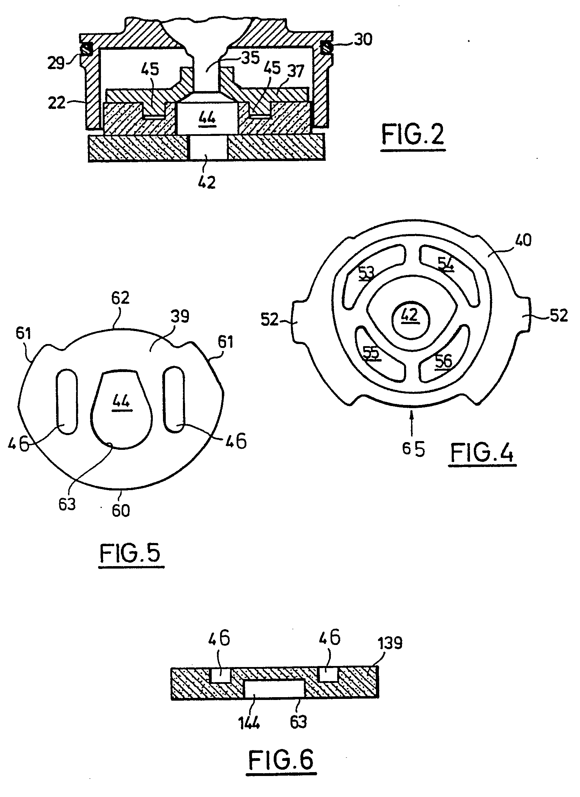

Das Halterungsteil 23 weist eine an der Außenseite und der Innenseite vergrößerte axiale Durchbrechung 33 auf, die mindestens teilweise die Form einer Kugel aufweist. In diesem kugelförmigen Teil der Durchbrechung 33 ist der mittlere, etwa kugelförmige Abschnitt 34 des Bedienelementes 24 angeordnet. Unterhalb des kugelförmigen Abschnittes 34 setzt sich das Bedienelement 24 in einen Ansatz 35 fort, dessen Querschnitt in Fig. 5 etwa kreisförmig ist, während der Querschnitt des Ansatzes 35 aus einer senkrecht hierzu genommenen Richtung, siehe Fig. 2, rechteckig ist. Dieser Ansatz 35 ist in einer entsprechend geformten Ausnehmung 36 eines Bewegungs-Übertragungs-Elementes 37 angeordnet. Dieses Bewegungs-Übertragungs-Element ist in einem, im Innern der Hülse 22 angeordneten Ring 38 verschiebbar und drehbar gelagert. Ein Verschwenken des Bedienungselementes 24 um eine senkrecht zu der Ebene der Fig. 1 verlaufende Achse führt zu einer Verschiebung des Bewegungs-Übertragungs-Elementes 37, während eine Verdrehung des Bedienelementes 24 um seine eigene Längsachse zu einer Verdrehung des Bewegungs-Übertragungs-Elementes 37 führt. Das Bewegungs-Übertragungs-Element 37 ist mit einer aus Keramik bestehenden Steuerscheibe 39 gekoppelt. Die in Fig. 1 untere Begrenzungsfläche der Steuerscheibe 39 bildet eine erste Steuerfläche.

Unterhalb der bewegbaren Steuerscheibe 39 befindet sich die in dem Steuereinsatz festgehaltene feststehende Steuerscheibe 40, deren obere Begrenzungsfläche die zweite Steuerfläche bildet. Die nur schematisch dargestellte feststehende Steuerscheibe 40 liegt auf dem Kartuschenboden 19 auf. Die oberen Ausgänge der Durchbrüche 20 und 21 des Kartuschenbodens 19 stimmen mit Öffnungen 41, 42 in der Steuerscheibe 40 überein. Um die Öffnungen der Durchbrüche 20, 21 sind sowohl auf der Oberseite des Kartuschenbodens 19 als auch auf der Unterseite Dichtungen 43 angeordnet.

Auch die bewegbare Steuerscheibe 39 weist eine durchgehende Öffnung 44 auf, deren Form im einzelnen noch erläutert wird.

Fig. 2 zeigt nun einen Teilschnitt durch die Anordnung nach Fig. 1 aus einer dazu senkrechten Richtung. Hier ist zu sehen, daß der Ansatz 35 des Bedienelementes 24 aus dieser Richtung einen rechteckigen Querschnitt aufweist und in die entsprechend gestaltete Ausnehmung 36 des Bewegungs-Übertraguns-Elementes 37 bündig eingreift. Das Bewegungs-Übertragungs-Element 37 weist an seiner Unterseite zwei langgestreckte Rippen 45 auf, die in entsprechend ausgebildete Nuten 46 auf der Oberseite der bewegbaren Steuerscheibe 39 eingreifen. Dadurch wird eine Drehung der bewegbaren Steuerscheibe 39 gegenüber der feststehenden Steuerscheibe 40 ermöglicht.

Fig. 3 zeigt eine Aufsicht auf den Kartuschenboden 19. Dieser besitzt etwa die Form einer Kreisscheibe mit an seiner Außenseite angeordneten Ansätzen 47 zum Eingreifen in entsprechende Nuten im Inneren des Mischergehäuses 11, wobei die Ansätze 47 unterschiedliche Breiten aufweisen, damit ein verkehrtes Einlegen des Kartuschenbodens verhindert wird.

Der Kartuschenboden 19 weist einen zentralen insbesondere kreisförmigen Durchbruch 21 auf, siehe auch Fig. 1. Um den zentralen Durchbruch 21 herum sind Öffnungen 48 bis 51 angeordnet, die die oberen Ausmündungen der Durchbrüche 20 in Fig. 1 bilden. Zwischen den Öffnungen 48 bis 51 und außerhalb dieser Öffnungen ist die in Fig. 1 dargestellte Dichtung 43 eingesetzt. Die Öffnung 48 liegt in einem Quadranten des etwa kreisförmigen Kartuschenbodens 19, während die Öffnung 51 in dem gegenüberliegenden Quadranten liegt. Das gleiche gilt für die Öffnungen 49 und 50, die also ebenfalls diametral einander gegenüberliegen. Der Durchbruch 21 ist leicht exzentrisch gegenüber den Öffnungen 48 bis 51 versetzt, wobei alle Öffnungen sich etwa bogenförmig erstrecken.

Die Form der Öffnungen 48 bis 51 entspricht etwa der Form der Öffnung 41 der feststehenden Steuerscheibe 40, die in Fig. 4 noch erläutert wird. Mit Hilfe des Kartuschenbodens 19 wird eine Verbindung zwischen den Öffnungen bzw. Öffnungsbereichen der feststehenden Steuerscheibe 40 und dem Gehäuseboden 12 der Mischarmatur hergestellt. Es ist dabei möglich, wie in Fig. 1 zu sehen ist, daß dem Durchbruch 21 des Kartuschenbodens keine Öffnung im Gehäuseboden 12 des Mischventils entspricht, so daß also der Durchbruch 21 in seiner Wirkung stillgelegt ist, ohne daß es erforderlich wäre, einen anderen Kartuschenboden 19 zu verwenden. Es ist für Spezialzwecke ebenfalls möglich, den in Fig. 3 dargestellten Kartuschenboden 19 in Zusammenhang mit einem Mischergehäuse 11 zu verwenden, in dem zum Beispiel die Öffnung 48 kein Wassereinlass entspricht. Dadurch lassen sich unterschiedliche Mischungsverhältnisse durchführen, obwohl ständig der gleiche Steuereinsatz verwendet wird.

Fig. 4 zeigt nun die Ansicht der feststehenden Steuerscheibe 40, die wiederum etwa Kreisform mit zwei Zentrierungsansätzen 52 aufweist. Die feststehende Steuerscheibe 40 enthält vier Öffnungen 53 bis 56, die in ihrer Form und Anordnung den Öffnungen 48 bis 51 des Kartuschenbodens 19 entsprechen. Die Öffnung 53 liegt diametral der Öffnung 56 gegenüber, während die Öffnung 54 der Öffnung 55 diametral gegenüberliegt. Die Steuerscheibe 40 besitzt ebenfalls eine zentrale kreisrunde Öffnung 42, siehe auch Fig. 1. Die Öffnung 42 ist leicht exzentrisch angeordnet. Die Öffnungen 53 bis 56 erstrecken sich alle jeweils über etwa den gleichen Winkel, während die Flächen der Öffnungen 53 und 56 verschieden gross sind. Zieht man eine, die benachbarten Öffnungen 53 und 54 und die benachbarten Öffnungen 55 und 56 voneinander trennende Linie, so sind jeweils die Öffnungen 53 und 54 und 55 und 56 zueinander spiegelbildlich ausgebildet.

Fig. 5 zeigt die Aufsicht auf die bei der Ausführungsform nach Fig. 1 und 2 verwendete bewegbare Steuerscheibe 39. Sie enthält eine zentrale Öffnung 44 und seitlich zu diesen die beiden in Fig. 2 angesprochenen Nuten 46.

Die in Fig. 5 untere Hälfte der Steuerscheibe 39 wird von einer Kante 60 begrenzt, die längs eines Kreisbogens verläuft. Die in Fig. 5 obere Hälfte der Steuerscheibe 39 wird von einer Kante 61 begrenzt, die in ihren äußeren Abschnitten den gleichen Radius, aber einen unterschiedlichen Mittelpunkt wie die Kante 60 der unteren Hälfte. Etwa in der Mitte der oberen Hälfte ist die Kante 61 über einen Winkel von etwa 90° durch eine zurückgesetzte Kante 62 ersetzt, die auf einem Kreisbogen liegt. Die Kante 62 bildet eine Außenkanten-Steuerung in Zusammenhang mit den Öffnungen 53 und 54 in Fig. 4, wie im folgenden noch gezeigt werden wird.

Die Randkante 63 der Öffnung 44 in der Steuerscheibe 39 bildet mit den zwei anderen Öffnungen 55, 56 eine Innenkanten-Steuerung.

Die Wirkungsweise der bislang geschilderten Vorrichtung ist die folgende. Das Wasser strömt über den Wassereinlaß 13, siehe Fig. 1, durch den Durchbruch 20 in den Kartuschenboden 19 zu den Öffnungen 53 bis 56 in der feststehenden Steuerscheibe 40. Je nach Stellung der bewegbaren Steuerscheibe 39 sind die Öffnungen mehr oder weniger geschlossen. Falls die Öffnungen mindestens teilweise geöffnet sind, fließt das Wasser aus den Öffnungen durch die Zentralöffnung 44 der bewegbaren Scheibe bzw. an der Kante 62 der bewegbaren Scheibe 39 vorbei in den Raum 64 oberhalb der bewegbaren Steuerscheibe 39 und von dort aus nach außen in Richtung auf die Seitenwand des Gehäuses 11, von wo aus das Wasser axial nach unten am Gehäuserand entlang durch die Wasserauslaßöffnung 14 des Gehäusebodens 12 abfließt. Damit das Wasser an dieser Seite des Gehäuses 11 leichter wieder abströmen kann, besitzt sowohl der Kartuschenboden 19 als auch die feststehende Steuerscheibe 40 an dieser Stelle eine Aussparung 65, sie Fig. 3 und 4.

Der Steuereinsatz nach Fig. 1 läßt jedoch in einem anderen Mischergehäuse auch eine andere Strömung zu. Der Kartuschenboden 19 besitzt einen zentralen, mit der Zentralöffnung 42 der feststehenden Steuerscheibe 40 fluchtenden Durchbruch 21, der auch in einem Gehäuse eines Mischers verwendet werden könnte, in dem ein zentraler Wasserauslaß in Verlängerung des Durchbruches 21 vorhanden ist. Dann kann ein Wasserauslauf aus dem Gehäuse auch durch diesen zentralen Auslaß erfolgen. In diesem Fall kann man die in Fig. 6 im Schnitt dargestellte bewegbare Steuerscheibe 139 verwenden, die im Gegensatz zu der Steuerscheibe nach Fig. 5 keine zentrale durchgehende Öffnung 44, sondern eine nur nach unten offene Ausnehmung 144 aufweist. Die Form dieser Ausnehmung 144 entspricht im übrigen vollständig der Form der Öffnung 44 der Steuerscheibe 39 nach Fig. 5, so daß auch die Randkante 63 identisch ist. Es läßt sich damit die gleiche Steuerungscharakteristik ermöglichen, wobei der Abfluß nur nach unten durch die Zentralöffnung 42 der Steuerscheibe 40 erfolgt.

Die Steuerscheibe nach Fig. 6 kann zu mehreren Zwecken eingesetzt werden. Zum einen ist es möglich, über die Ausnehmung 144 und die zentrale Öffnung 42 der feststehenden Steuerscheibe nur eine Steuerung beispielsweise des heißen Wassers und über die Außenkante 62 nur eine Steuerung des kalten Wassers vorzunehmen. Beide Wasserströmungen können dann am Ausgang des Mischers miteinander vereinigt werden. Diese Mischung am Mischerausgang wird von dem britischen Standard vorgeschrieben.

Ebenfalls möglich ist es, über die Ausnehmung 144 und einen zentralen Auslaß beispielsweise eine Seitenbrause zu steuern, während die Kopfbrause über die Steuerkante 62 und den seitlichen Auslaß 14 gesteuert wird. Beide Steuerungen sind mechanisch gekoppelt, wobei jedoch stromab des Mischers keine Verbindung zwischen den Leitungen zu den einzelnen Brausen vorhanden sind. Daher kann auch kein Zurückfließen von Wasser aus der Kopfbrause zur Seitenbrause erfolgen.

Es ist auch möglich, für Mischer mit geringer Durchflußleistung, z.B. Waschtisch- oder Bidetmischer, nur die Innenkantensteuerung zu verwenden.

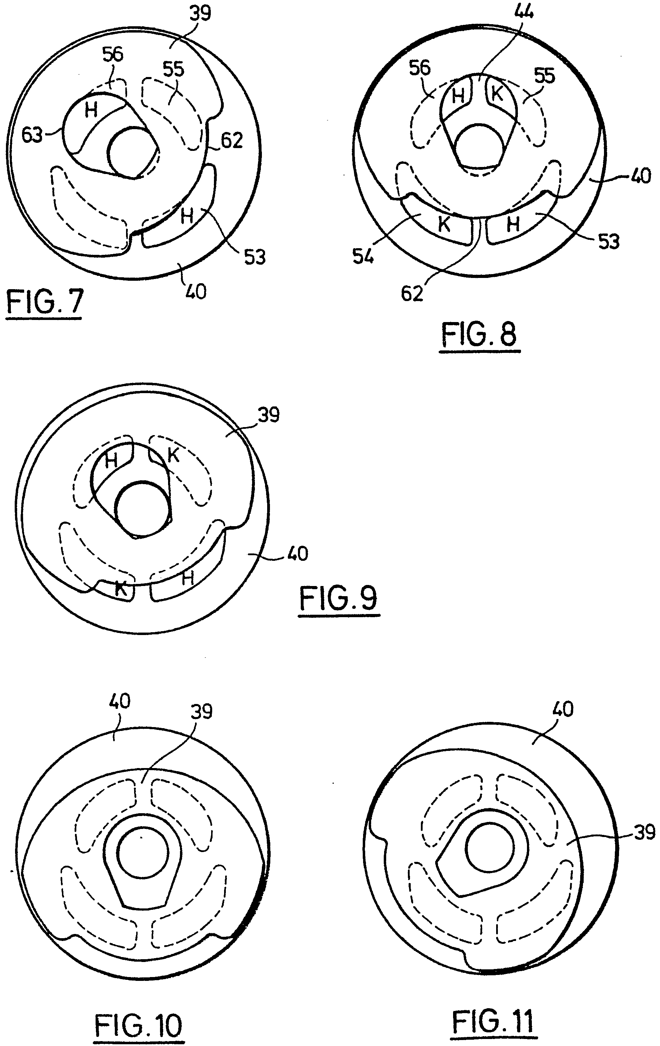

Unter Bezugnahme auf die Fig. 7 bis 11 wird nun schematisch das Zusammenwirken der beiden Steuerscheiben zur Mischung der beiden Wasserströmungen und zur Einstellung der Wassermenge beschrieben. Eine Drehung der bewegbaren Steuerscheibe 39 bzw. 139 bewirkt eine Temperaturänderung, während eine Verschiebung der bewegbaren Steuerscheibe in Längsrichtung der länglichen Zentralöffnung 44 die Wahl der Wassermenge ermöglicht. In Fig. 7 ist die Steuerscheibe im Gegenuhrzeigersinn bis zu ihrer Endstellung gedreht und gleichzeitig nach links oben verschoben. Die Kante 63 der Öffnung 44 gibt die Öffnung 56 der feststehenden Steuerscheibe 140, die mit dem heißen Wasser verbunden sein soll, vollständig frei. Gleichzeitig gibt die Steuerkante 62 an der Außenseite der Steuerscheibe 39 die Öffnung 53 ebenfalls fast vollständig frei, die ebenfalls mit dem Heißwassereinlauf verbunden ist. Die Stellung bedeutet also maximale Öffnung bei maximaler Temperatur. Wird die Steuerscheibe 39 nun im Uhrzeigersinn gedreht, so ergibt sich das in Fig. 8 dargestellte Bild. Die Öffnung 44 gibt die Öffnungen 55 und 56 in der feststehenden Steuerscheibe zu gleichen Teilen frei, während die Kante 62 die Öffnungen 53 und 54 ebenfalls zu etwa gleichen Teilen freigibt. Fig. 8 zeigt also die Stellung des Steuereinsatzes bei einem Mischungsverhältnis von 50%.

In Fig. 9 ist die bewegbare Steuerscheibe 39 gegenüber der Stellung nach Fig. 8 wiederum etwas im Gegenuhrzeigersinn verdreht und gleichzeitig etwas nach rechts unten verschoben, so daß eine etwas wärmere Temperatur mit etwas geringerer Durchflußmenge eingestellt ist.

Verschiebt man die bewegbare Steuerscheibe 39 aus der Stellung in Fig. 8 nach unten, ohne sie zu drehen, erhält man die in Fig. 10 dargestellte Position, in der bei mittlerer Temperaturstellung das Ventil geschlossen ist. In dieser geschlossenen Stellung kann die Steuerscheibe 39 sowohl im Uhrzeigersinn als auch im Gegenuhrzeigersinn gedreht werden, ohne daß das Ventil geöffnet wird.

Wie sich aus den Fig. 7 bis 11 ergibt, sind einander gegenüberliegende Öffnungen 53 bis 56 in der feststehenden Steuerscheibe 40 mit jeweils dem gleichen Wassereinlaß verbunden. Für Spezialzwecke kann es auch sinnvoll sein, beispielsweise beide Öffnungen 53 und 54 mit dem gleichen Wassereinlaß, beispielsweise kaltem Wasser zu verbinden, wenn eine Temperaturbegrenzung gewünscht wird. Bei Durchlauferhitzern könnte es auch sinnvoll sein, zur Verringerung des Druckabfalles beide Öffnungen 53 und 54 mit heißem Wasser zu verbinden.

Während bei dem dargestellten Ausführungsbeispiel die für die Innensteuerung verwendeten Öffnungen 55 und 56 spiegelsymmetrisch sind, was auch für die für die Außensteuerung verwendeten Öffnungen 53 und 54 gilt, wäre es auch möglich, zur Erzielung einer bestimmten Temperaturcharakteristik, die Öffnungen nicht spiegelsymmetrisch anzuordnen. Durch die Maßnahme nach der Erfindung erhält man mehrere Vorteile. Der für die Steueröffnungen zur Verfügung stehende Raum wird optimal ausgenutzt. Dadurch können im Vergleich mit herkömmlichen Steuerungen bei gleicher Bauweise der Kartusche wesentlich höhere Wassermengen durchgesetzt werden. Andererseits können bei nur geringer Steigerung der Wassermenge die Strömungsgeschwindigkeiten niedriger gehalten werden und die Geräuschentwicklung dadurch verringert werden. Für Armaturen, die an sich nur geringere Wassermengen steuern sollen, kann die gleiche Kartusche verwendet werden, wobei in diesem Fall nur eine Steuerung angeschlossen wird. In der Praxis ist dies problemlos möglich; der Steuereinsatz braucht nur in ein entsprechend gebohrtes Mischergehäuse eingesetzt zu werden. Die Dichtungen bleiben dabei dieselben. Dabei ist es dann je nach Einzelfall möglich, die innere oder die äußere Steuerung zu verwenden.

Durch die Anordnung eines zentralen Durchbruchs in der feststehenden Steuerscheibe kann die Kartusche als geschlossenes System verwendet werden, wenn die bewegliche Steuerscheibe entweder oben abgeschossen wird, zum Beispiel durch das Bewegungs-Übertragungs-Teil, oder eine nur nach unten offene Ausdehnung aufweist. Der Mischwasserabfluß geht dann nach unten parallel zum Zufluß. Durch Weglassen der Abdeckung oder Austauschen der bewegbaren Steuerscheibe kann auch die Innenkantensteuerung als offenes System benützt werden.

Sowohl der Innenkanten-Steuerung als auch der Außenkanten-Steuerung kann durch entsprechende Formgebung eine besondere Mischgeometrie zugeordnet werden. Entsprechend dem Verwendungszweck kann dann die Innenkanten-Steuerung, die Außenkanten-Steuerung oder beide gleichzeitig verwendet werden.

Durch kreuzweises Ansteuern der Innen- und Außensteuerung, zum Beispiel Innensteuerung nur für Heißwasser und Außensteuerung nur für Kaltwasser, können bei der geschlossenen Version der Innensteuerung die Anforderungen des British Standard erfüllt werden. Diese Sonderanforderung konnte bisher nur mit Spezialarmaturen erfüllt werden.

Die Kartusche kann bei Mischern für drucklose Boiler verwendet werden, bei denen ähnliche Bedingungen wie bei British Standard gelten.

Ein weiterer Vorteil läßt sich im Zusammenhang mit Durchlauferhitzern erzielen. Bei diesen liegt die Besonderheit darin, daß der größte Druckabfall im Durchlauferhitzer selbst stattfindet und die nachgeschaltete Armatur dann mindestens auf der Heißwasserseite einen möglichst geringen Strömungswiderstand haben soll. Auch hier bietet es sich an, für die Heißwasserseite die Außenkanten-Steuerung mit dem größeren Querschnitt und für die Kaltwasserseite die Innenkanten-Steuerung zu verwenden. Durch die in etwa umgekehrt proportionale Zuordnung zu den Drücken in der Versorgungsleitung erreicht man wieder ein ausgeglichenes Steuerverhalten.

Diese gesamten Variationsmöglichkeiten ergeben sich bei gleichbleibender Steuerscheibe lediglich durch geänderte Anschlüsse und ggf. noch durch Abdeckung des inneren Steuersystems zu einem geschlossenen System im Zusammenhang mit der zentralen Ablaufbohrung. Die Keramikscheiben selbst und der übrige Aufbau der Kartusche kann dabei gleich bleiben. Die Anpassung der Anschlüsse kann über entsprechende Bohrungen im Gehäuse direkt unterhalb der Kartusche erfolgen.

**Patentansprüche**

1. Steuereinsatz für sanitäre Mischarmaturen, mit einem feststehenden mit Wassereinlaßöffnungen (13) der Armatur in Verbindung bringbaren, eine vorzugsweise ebene Steuerfläche aufweisenden Steuerelement, das mindestens einen Öffnungsbereich (54, 55) für Kaltwasser und mindestens einen Öffnungsbereich (53, 56) für Warmwasser aufweist, sowie einem gegenüber diesem in zwei Freiheitsgraden mit Hilfe eines Mischerhebels bewegbaren, eine vorzugsweise ebene Steuerfläche aufweisenden Steuerelement, das zur Steuerung der Menge und des Mischungsverhältnisses je nach seiner Stellung die Öffnungsbereiche (53–56) abdeckt oder mit mindestens einem Wasserauslaß (14) in Verbindung bringt, dadurch gekennzeichnet, daß die Öffnungsbereiche (53–56), von denen vorzugsweise mindestens einer mehrere Öffnungen aufweist, und/oder die Konturen (62, 63) des bewegbaren Steuerelements und/ oder der Wasserauslaß (14, 42) derart angeordnet und ausgebildet sind, daß sich mindestens zwei getrennte selbstständige, mechanisch gekoppelte Steuerungen ergeben.

2. Steuereinsatz nach Anspurch 1, dadurch gekennzeichnet, daß mindestens zwei Steuerungen auf einen gemeinsamen Wasserauslaß (14) einwirken.

3. Steuereinsatz nach Anspruch 1, dadurch gekennzeichnet, daß mindestens zwei Steuerungen auf je einen von dem jeweils anderen getrennten Wasserauslaß einwirken.

4. Steuereinsatz nach einem der vorhergehenden Ansprüche, dadurch gekennzeichnt, daß das bewegbare Steuerelement eine äußere Steuerkante (62) zur Verwirklichung der einen Steuerung und eine innere geschlossene Steuerkante (63) zur Verwirklichung der zweiten Steuerung aufweist.

5. Steuereinsatz nach einem der vorhergehenden Ansprüche, dadurch gekennzeichnet, daß das feststehende Steuerelement je zwei Öffnungsbereiche (53, 54; 55, 56) für jede Steuerung aufweist, von denen vorzugsweise je zwei Öffnungsbereiche (53, 56; 54, 55) aneinander diametral gegenüberliegen und sich vorzugsweise über etwa den gleichen Winkel erstrecken.

6. Steuereinsatz nach einem der vorhergehenden Ansprüche, dadurch gekennzeichnet, daß das feststehende Steuerelement mit einem Wasserauslaß in Verbindung bringbar ist.

7. Steuereinsatz nach einem der vorhergehenden Ansprüche, dadurch gekennzeichnet, daß die Steuerflächen Begrenzungsflächen von vorzugsweise ebenen Steuerscheiben (39, 139, 40) sind.

8. Steuereinsatz nach einem der vorhergehenden Ansprüche, dadurch gekennzeichnet, daß eine Steuerkante (63) Teil einer die zugehörige Scheibe (39) durchsetzenden Öffnung ist oder eine in die Steuerfläche ausmündende, zur anderen Seite der Steuerscheibe (139) hin geschlossene Ausnehmung (144) begrenzt.

9. Steuereinsatz nach einem der vorhergehenden Ansprüche, dadurch gekennzeichnet, daß beide Steuerungen mindestens teilweise identische Steuerungscharakteristika aufweisen.

10. Steuereinsatz nach einem der vorhergehenden Ansprüche, dadurch gekennzeichnet, daß die einander gegenüberliegenden Öffnungsbereiche (53, 56; 54, 55) unterschiedlich großen Querschnitt aufweisen und/oder vorzugsweise zwei benachbarte Öffnungsbereiche (53, 54; 55, 56) vorzugsweise gleichen Querschnitts mit einer Steuerkante (62; 63) eine Steuerung bilden.

11. Steuereinsatz nach einem der Ansprüche 1 bis 8 und 10, dadurch gekennzeichnet, daß beide Steuerungen unterschiedliche Steuerungscharakteristika aufweisen und/oder sich zeitlich überlappende Öffnungsvorgänge bewirken.

12. Steuereinsatz nach einem der vorhergehenden Ansprüche, dadurch gekennzeichnet, daß die Steuerflächen Kugelflächen sind.

## Claims

1. Control insert for sanitary mixer valves with a fixed control element having a preferable planar control surface which can be connected to the water inlet ports (13) of the valve having at least one opening zone (54, 55) for cold water and at least one opening zone (53, 56) for hot water, as well as a control element having a preferably planar control surface movable with respect thereto with two degrees of freedom with the aid of a mixer lever which, for controlling the quantity and mixing ratio and as a function of its position, covers the opening zones (53–56) or is connected to at least one water outlet (14), characterized in that the opening zones (53–56), whereof preferably at least one has several openings, and/or the contours (62, 63) of the movable control element and/or the water outlet (14, 42) are so arranged and constructed that at least two separate, independent, mechanically coupled control systems are obtained.

2. Control insert according to claim 1, characterized in that at least two control systems act on a common water outlet (14).

3. Control insert according to claim 1, characterized in that at least two control systems act on in each case one water outlet, which is separate from the other water outlet.

4. Control insert according to one of the preceding claims, characterized in that the movable control element has an outer control edge (62) for realizing one control system and an inner closed control edge (63) for realizing the second control system.

5. Control insert according to one of the preceding claims, characterized in that the fixed control element has in each case two opening zones (53, 54; 55, 56) for each control system, whereof preferably in each case two opening zones (53, 56; 54, 55) diametrically face one another and preferably extend over roughly the same angle.

6. Control insert according to one of the preceding claims, characterized in that the fixed control element is connectable with a water outlet.

7. Control insert according to one of the preceding claims, characterized in that the control surfaces are limiting surfaces of preferably planar control disks (39, 139, 40).

8. Control insert according to one of the preceding claims, characterized in that a control edge (63) is part of an opening passing through the associated disk (39) or limits a clearance (144) issuing into the control surface and closed towards the other side of the control disk (139).

9. Control insert according to one of the preceding claims, characterized in that both control systems have at least partly identical control characteristics.

10. Control insert according to one of the preceding claims, characterized in that the facing opening zones (53, 56; 54, 55) have cross-sections of different sizes and/or preferably two adjacent opening zones (53, 54; 55, 56) preferably with the same cross-section with a control edge (62; 63) form a control system.

11. Control insert according to one of the claims 1 to 8 and 10, characterized in that both control systems have different control characteristics and/or achieve time overlapping opening operations.

12. Control insert according to one of the preceding claims, characterized in that the control surfaces are spherical surfaces.

## Revendications

1. Cartouche de commande équipant des robinetteries sanitaires, avec une organe de commande stationnaire associable à des orifices d'admission (13) de la robinetterie, présentant de préférence une surface de commande plane et au moins une zone d'admission (54, 55) pour l'eau froide et au moins une zone d'admission (53, 56) pour l'eau chaude, ainsi qu'avec un organe de commande pouvant être déplacé par rapport à celui-ci avec deux degrés de liberté à l'aide d'un levier et présentant de préférence une surface de commande plane, lequel organe obture les zones d'admission (53–56) ou les associe, en fonction de la position qu'il occupe, à au moins un raccord de sortie d'eau (14) pour réguler le débit et le rapport de mélange, caractérisée en ce que les zones d'admission (53–56), dont de préférence l'une au moins présente plusieurs orifices, et/ou en ce que les contours (62, 63) de l'organe mobile de commande et/ou le raccord de sortie d'eau (14, 42) sond disposés et configurés de telle manière qu'il se crée au moins deux commandes autonomes, séparées, et accouplées mécaniquement.

2. Cartouche de commande selon la revendication 1, caractérisée en ce qu'au moins deux commandes agissent sur un raccord de sortie d'eau (14) commun.

3. Cartouche de commande selon la revendication 1, caractérisée en ce qu'au moins deux commandes agissent sur respectivement l'un des orifices de sortie respectivement séparé de l'autre.

4. Cartouche de commande selon l'une quelconque des revendications précédentes, caractérisée en ce que l'organe mobile de commande présente une arête de commande (62) extérieure pour mettre en œuvre l'une des commandes, et une arête de commande (63) intérieure fermée pour mettre en œuvre la seconde commande.

5. Cartouche de commande selon l'une quelconque des revendications précédentes, caractérisée en ce que l'organe de commande stationnaire présente respectivement deux zones d'admission (53, 54; 55, 56) pour chaque commande, dont de préférence respectivement deux zones d'admission (53, 56; 54, 55) sont diamétralement opposées et ont de préférence le même angle.

6. Cartouche de commande selon l'une quelconque des revendications précédentes, caractérisée en ce que l'organe de commande stationnaire est associable à un raccord de sortie.

7. Cartouche de commande selon l'une quelconque des revendications précédentes, caractérisée en ce que les surfaces de commande sont les surfaces de délimitation de disques de commande (39, 139, 40) de préférence plans.

8. Cartouche de commande selon l'une quelconque des revendications précédentes, caractérisée en ce qu'une arête de commande (63) est une partie d'un orifice traversant le disque (39) correspondant ou délimite un évidement (144) débouchant sur la surface de commande et fermé de l'autre côté du disque de commande (139).

9. Cartouche de commande selon l'une quelconque des revendications précédentes, caractérisée en ce que les deux commandes présentent du moins partiellement des caractéristiques de commande identiques.

10. Cartouche de commande selon l'une quelconque des revendications précédentes, caractérisée en ce que les zones d'admission (53, 56; 54, 55) mutuellement opposées présentent une section transversale de différentes dimensions et/ou en ce que deux zones d'admission (53, 54; 55, 56) voisines avec section transversale de dimensions de préférence égales forment une commande avec une arête de commande (62; 63).

11. Cartouche de commande selon l'une quelconque des revendications 1 à 8 et 10, caractérisée en ce que les deux commandes présentent des caractéristiques de commande différentes et/ou commandent des processus d'ouverture qui se chevauchent dans le temps.

12. Cartouche de commande selon l'une quelconque des revendications précédentes, caractérisée en ce que les surfaces de commande sont des surfaces sphériques.

FIG.1

FIG.3

FIG.2

FIG.4

FIG.5

FIG.6

FIG.7

FIG.8

FIG.9

FIG.10

FIG.11